# EUROPEAN PATENT APPLICATION

(11) **EP 3 120 703 A1**
(43) Date of publication of application: **25.01.2017**
(21) Application number: 16179820.2
(22) Date of filing: 15.07.2016
(51) Int. Cl.: A21B 3/13, B65D 81/34, B65D 5/42

(54) **MOLD FOR BAKING FOODSTUFF, IN PARTICULAR BREAD**

(30) Priority: 23.07.2015 IT UB20157229 U
(71) Applicant: CARTOTECNICA ESSE-BI S.r.l., 22030 ORSENIGO (COMO) (IT)
(72) Inventor: ZUFFI, Tiziano, 22030 ORSENIGO (CO) (IT)
(74) Representative: Ponzellini, Gianmarco

(57) **Abstract**

The present invention refers to a cooking mould (1) for food, particularly for bread, of paper material having a substantially rectangular shape and exhibiting a base (2) having a polygonal shape and a lateral wall (3). The base (2) is delimited by longitudinal sides (2a) defining a main development direction of the base (2), and transversal sides (2b). The lateral wall (3) emerges transversally from the base (2) for defining a housing receptacle (4) for a food. The mould (1) exhibits an inner surface (1a) facing the receptacle (4) and an outer surface (1b) and further exhibits a coating of oil-repellent and/or water-repellent material at least at the inner surface (1a). The lateral wall (3) defines a plurality of angular portions (5), each of them comprises first, second and third walls (6, 7, 11) transversal to each other, the second wall (7) being interposed between the first and third walls (6, 11) for defining a central portion of said angular portion (5). The mould (1) exhibits at least one opening (10) defined between the base (2) and lateral wall (3) at an angular portion (5). The mould (1) is in a single piece and is formed from a flat preform (100).

## Description

### Field of the invention

The object of the present invention is a cooking mould for food, particularly for bread.

Specifically, the present invention refers to a tray of paper material adapted to contact food and arranged for enabling to cook a dough for bread in an oven and therefore for packaging the finished product for displaying and selling the same.

### Technical Background

Containers for food, such as trays or similar, of paper material adapted to be transported and/or to display food products in general, are known.

Moreover, cooking moulds for food of paper material are known. Such cooking moulds are adapted to receive food dough and are adapted to be placed in an oven for enabling to cook the food products.

Further, a wood tray for cooking bread, is known. An oven paper sheet destined to contact the bread dough is positioned in the tray. Then the tray is placed in an oven for cooking the bread.

Since such tray is widespread in the market, such tray is expensive due to the used wood and requires two different types of materials (wood and paper) for being capable of producing/using it.

In light of above, a main object of the present invention consists of solving one or more of the problems found in the prior art.

An object of the present invention consists of providing a simple and economically manufacturable mould, particularly adapted for cooking bread.

A further object of the present invention consists of making a mould capable of enabling to better cook food products.

An additional object of the invention consists of providing a mould capable of ensuring to homogeneously and uniformly cook food products.

A further object of the present invention consists of providing a mould enabling to easily detach the food products from the mould itself.

These objects and other which will better appear in the following description, are substantially met by a cooking mould and by an use of the cooking mould according to what is stated in one or more of the attached claims, considered alone or by any combinations of each other or in a combination with anyone of the characteristics described in the following.

### Summary of the invention

The aspects of the invention are presented in the accompanying claims.

In a further independent aspect, it is provided a method of making a cooking mould, particularly defined by anyone of the claims, comprising the steps of:
- providing a flat preform (100) of paper material comprising a first portion (102), second portions (111) connected to the first portion (102) at respective creased transversal sides of the first portion (102), third portions (106) connected to the first portion (102) at creased longitudinal sides (102a) of the first portion (102) and appendages (105) connected to opposite creased ends of the third portions (106), each appendage (105) comprising a fourth and fifth portions (107, 108), between the fourth portion (107) and first portion (102) it is defined a notch (110) delimited by edges (110a, 110b) facing and spaced from each other,
- folding the second portions (111) with respect to the first portion (102),
- folding the third portions (106) with respect to the first portion (102) in order to bring the appendages (105) in proximity of the second portions (111) and define a receptacle (4) delimited at the bottom by the first portion (102) and laterally by the third portions (106),
- engaging at least one fifth portion (108) to the second portion (111) in order to form angular portions (5) of the mould (1), the engagement being preferably made by constraining, such as gluing, the fifth portion (108) to the second portion (111),
wherein bringing the appendages (105) in proximity of the second portions (111) comprises bringing near the fourth portion (107) to the first portion (102) in order to bring near the edges (110a, 110b) of the notch (110) and forming an opening (10) between the edges (110a, 110b) of the notch (110), the opening (10) being defined at an angular portion (5) of the mould (1).

### Description of the attached drawings

A detailed description of one or more preferred embodiment of the invention is given in an exemplifying and non limiting way in the following, wherein:
Figure 1 represents a flat preform from which a cooking mould according to the present invention can be obtained;
Figure 2 represents a step of folding the preform;
Figure 3 represents a perspective view of a cooking mould for food according to the present invention;
Figure 4 represents a bottom view of the cooking mould of Figure 3;
Figure 5 represents a detail of the cooking mould of Figure 3;
Figure 6 represents a detail of an angular portion of the cooking mould according to the present invention.

### Detailed description

Referring to the Figures, 1 generally indicates a cooking mould of paper material for food, particularly for bread. The cooking mould 1 is in a single piece and is obtained from a flat preform 100 of paper material.

The mould 1 comprises a base 2 and a lateral wall 3.

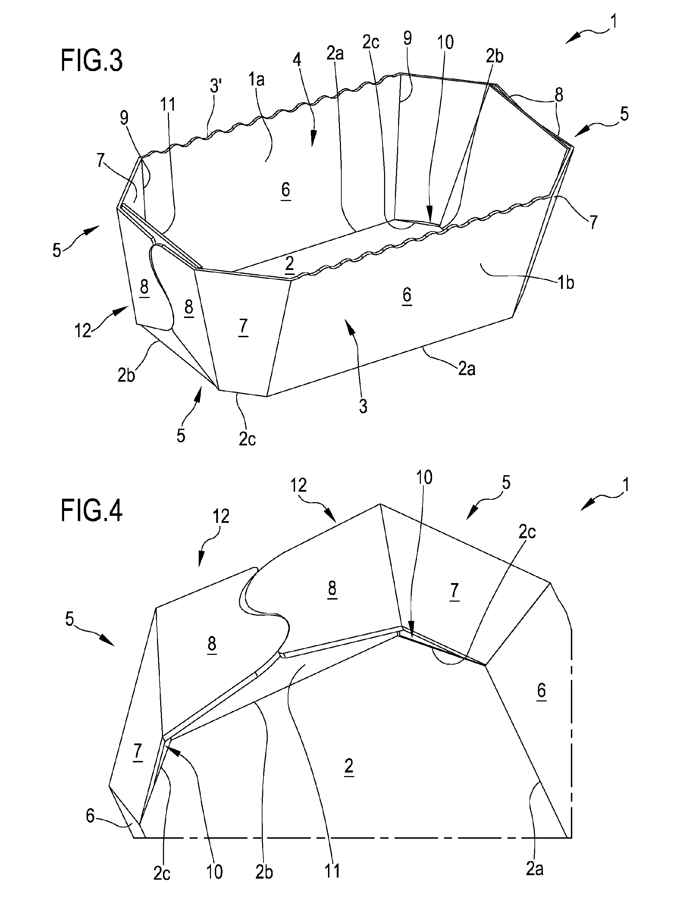

As illustrated in Figure 3 and in Figure 4, the base 2 exhibits a polygonal shape, particularly an octagonal one. However, other polygonal shapes for the base 2 are not excluded, such as the rectangular one or a slightly trapezoidal one. The base 2 can exhibit for example the shape of an irregular octagon and has longitudinal 2a and transversal sides 2b, which are joined by joining sides 2c. The longitudinal sides 2a (parallel to each other) define a prevalent development direction of the base 2.

The lateral wall 3 develops by emerging from the base 2 and defines a housing receptacle 4 for a food. The mould 1 exhibits a substantially rectangular (or square) shape and further exhibits an inner surface 1a and an outer surface 1b. The inner surface 1a faces the receptacle 4 and is covered by a coating of oil-repellent and/or water-repellent materials destined to prevent the food contained in the mould 1 from sticking to the inner surface 1a of the mould itself when is cooked. Preferably, the coating is of silicon material.

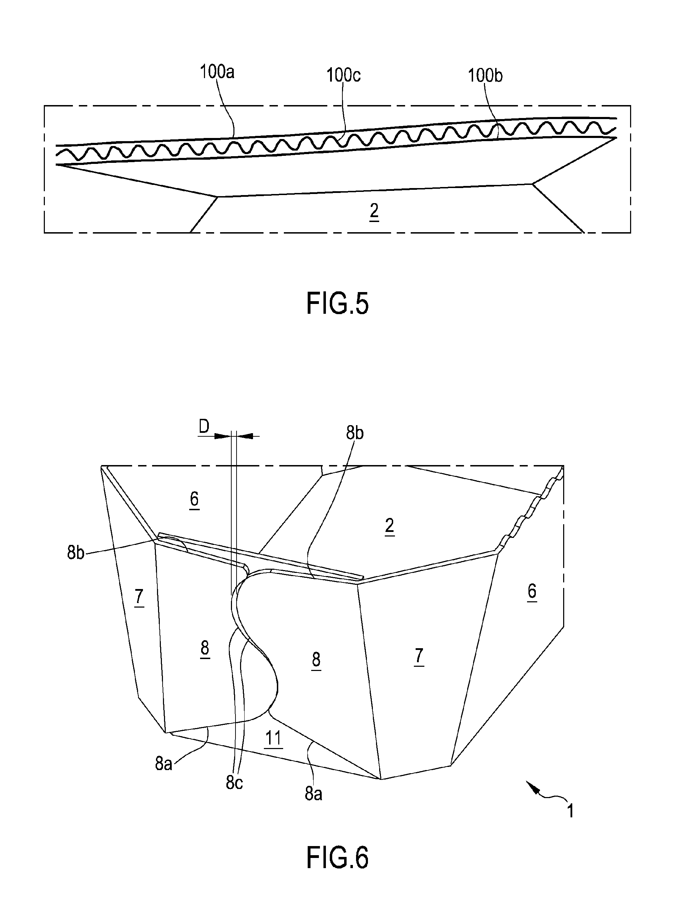

The lateral wall 3 is transversal to the base 2 and defines an obtuse angle with the base 2. Preferably, the obtuse angle is defined inside the receptacle 4 and is comprised between 90° and 100°. The lateral wall 3 exhibits a plurality of angular portions 5 having the same structure. The lateral wall 3 (see Figure 6, for example) comprises respective first, second and third walls 6, 7, 11. The first and second walls 6, 7 are laterally delimited by creasing lines 9 and lies on planes transversal to each other. A second wall 7 is disposed between the first and third walls 6, 11 and exhibits a substantially trapezoidal shape. The first and third walls 6, 11 are engaged with the base 2 and develop, without interruptions with respect to it at a longitudinal side 2a and at a transversal side 2b, respectively. On the contrary, the second wall 7 develops above a joining side 2c. A through opening 10 is defined between the second wall 7 and joining side 2c. As illustrated in Figure 6, the third wall 11 emerges from a transversal side 2b and is separated (is not a single piece) from the respectively flanked second walls 7. The structural connection is obtained by respective engagement portions 8, one for each second wall 7, which are outwardly overlapped and constrained to the third wall 11. Each engagement portion 8 is delimited by an upper and lower substantially rectilinear lengths 8a, 8b and a joining length 8c having an at least partially curvilinear shape and specifically an "S" shape.

The opening 10 develops between the angular portion 5 and base 2 and exhibits a substantially elongated shape parallel to a joining side 2c of the base 2 (see Figure 6). Specifically, the opening 10 extends for a length substantially equal to the length of the joining side 2c and develops parallel to it. The opening 10 is destined to enable the air to circulate between the base 2 and lateral wall 3 of the mould 1 when cooking the food and therefore enables to better cook the food also at a lower portion of the food which is in contact with the base 2 under the use conditions of the mould 1. As illustrated in the attached figures, the mould 1 comprises four angular portions 5 and each angular portion 5 is provided with a respective opening 10. Preferably, each angular portion 5 exhibits a single opening 10. The opening 10 can develop for a length of at least 1 cm, particularly for a length comprised between 1 cm and 5 cm. Preferably, the opening 10 length is substantially equal to 2 cm.

It is observed that the flat preform 100 by which it is obtained the mould 1, does not exhibit closed outline openings 10. As it will be better explained in the following, the openings 10 are defined when forming the mould 10 by folding the flat preform 100. In other words, the openings 10 are defined by reciprocally orienting the portions of the flat preform 100 when forming the mould 1.

The lateral wall 3 comprises an upper end edge 3' opposite to the base 2 and developing at least partially around the cavity 4. Preferably, the end edge 3' exhibits an ondulated outline at least at the portions defined above the longitudinal sides 2a of the base 2. The ondulated outline can extend all around the receptacle 4. Moreover, the mould 1 exhibits engagement portions 8 positioned at the transversal side 2b of the base 2. The engagement portions 8 are formed in a single piece with the respective second wall 7. In the embodiment illustrated in the attached figures, the engagement portions 8 are in number of four, facing each other two by two and develop parallel to the third wall 11. The engagement portions 8 are engaged with the respective third walls 11 for defining overlapping areas 12 adapted to provide stiffness to the mould 1.

As illustrated in Figure 3 for example, the third wall 11 faces the receptacle 4, while the engagement portions 8 are engaged behind it. The engagement portions 8 can be glued to the third walls 11 for enabling a stably engagement. The used glue is preferably adapted to be employed with paper material.

As illustrated in Figure 6, two engagement portions 8 of two adjacent angular portions 5 are engaged with the same third wall 11. The engagement portions 8 are engaged with the same third wall 11 and encompass it from opposite sides. The engagement portions 8 of the adjacent angular portions 5 are also adjacent to each other. Preferably, the engagement portions 8 are not in contact with each other but develop at a determined distance D from each other. As illustrated in Figure 6, the distance D can be defined between the "S" shaped ends. The distance D can be substantially constant or can vary along the development of the "S".

Moreover, the present invention refers to a flat preform 100 of paper material. The paper material of the flat preform 100 can have a grammage comprised between 200 and 300 gr. The flat preform 100 is preferably of a multilayer type and can comprise first and second substantially smooth layers 100a, 100b, a third ondulated layer 100c being interposed between them. The layered structure of the mould 1 obtained from the flat preform 100 is illustrated in Figure 5.

The flat preform 100 comprises a first portion 102 destined to define the base 2 of the mould 1. The first portion comprises longitudinal sides 102a, transversal sides 102b and joining sides 102c between them. Moreover, the flat preform 100 comprises second portions 111 engaged with the first portion 102 at the creased transversal sides 102b of the first portion 102. The second portions 111 are destined to form the third walls 11 of the mould 1. Preferably, the flat preform 100 exhibits two second portions 111. The creasing lines 109 destined to aid to fold the second portions 111 are defined between the first portion 102 and each second portion 111.

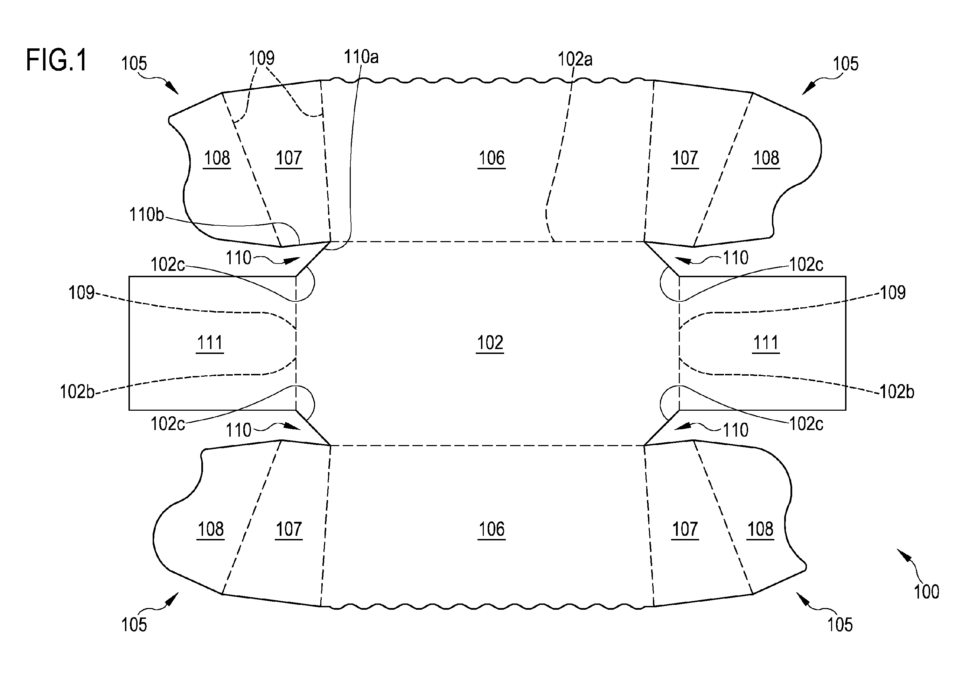

Further, the flat preform 100 exhibits third portions 106 engaged at the longitudinal sides 102a of the first portion 102. The third portions 106 are destined to form the first wall 6 of the angular portions 5 of the mould 1. Preferably, the flat mould 100 comprises two third portions 106 (see Figure 1). Moreover, the flat preform 100 comprises appendages 105 engaged at opposite ends of the third portions 106. Preferably, the flat preform 100 comprises four appendages 105 (see Figure 1). Each appendage 105 comprises a fourth and fifth portions 107, 108, which are separated by creasing lines 109. The creasing lines 109 are adapted to aid to fold said portions 107, 108.

The third, fourth and fifth portions 106, 107, 108 are destined to form the angular portions 5 of the mould 1. Specifically, the fourth and fifth portions 107, 108 are destined to form respectively the second wall 7 and the engagement portion 8 of the angular portion 1. Between the first portion 102 and fourth portion 107 is defined a notch 110. The notch 110 is defined by substantially rectilinear facing edges 110a, 11b respectively of the first portion 102 and fourth portion 107. Preferably, the notch 110 has a substantially "V" shape. Alternatively, the notch 110 can exhibit a "U" shape or anyway a shape defining two edges 110a, 110b facing each other.

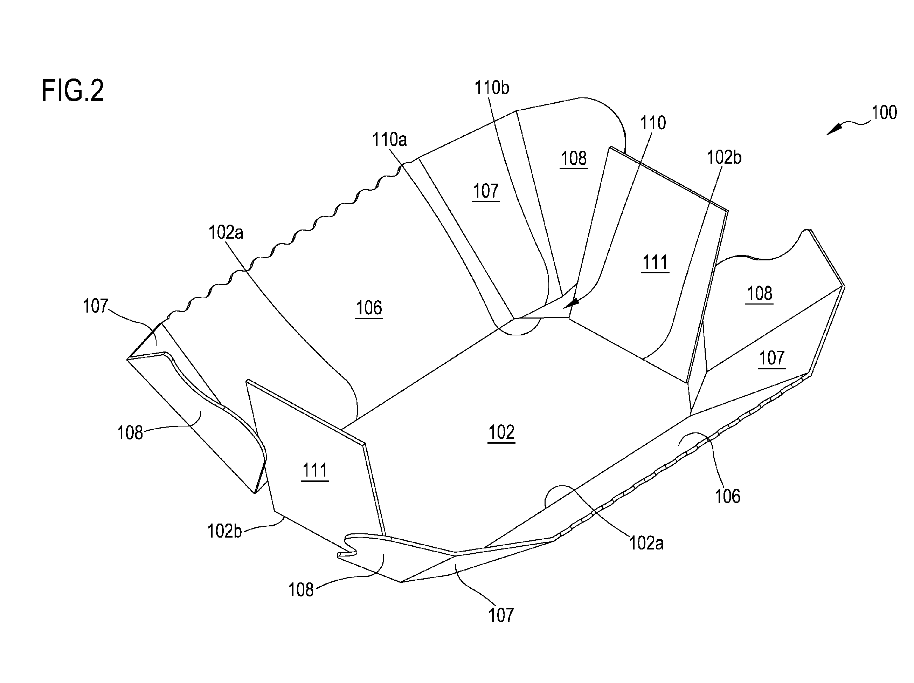

With reference to the passage from the arrangement of the flat preform 100 to the three-dimensional arrangement of the mould 1, it is performed by folding and gluing the portions of the flat preform 100. In a first step, the second portions 111 are folded with respect to the first portion 102. Then, the third portions 106 are folded with respect to the first portion 102 along the longitudinal sides 102a of the first portion 102. Now, the appendages 105 are folded in order to bring near the fourth and fifth portions 107, 108 to the respective adjacent second portions 111. Such assembling step is illustrated in Figure 2. At the fifth portion 108 and/or second portion 102 a predetermined amount of glue is engaged for enabling the engagement of the fifth portion 108 to the second portions 102. In this way, the lateral wall 3 and angular portions 5 of the cooking mould 1 are formed.

The step of folding the appendages 105 with respect to the second portion 111 causes the edges 110a, 110b of the notch 110 to approach each other and the formation of the openings 10. Now, the mould 1 is ready for being used.

The present invention enables to obtain one or more of the following advantages and to solve one or more of the problems found in the prior art.

First of all, the invention enables to make a cooking mould of paper material at a low cost.

The cooking mould according to the present invention, is further adapted to cook a plurality of foods, particularly bread.

Moreover, the cooking mould enables to homogeneously and uniformly cook foods, particularly bread, also at the base of the mould.

The presence of openings/notches at the angles of the base enables the hot air to better circulate during the cooking steps so that the product is prevented from burning and promote a more homogeneous cooking.

Moreover, the invention is easy to use, ready to implement and simple and economical to manufacture.

## Claims

1. Cooking mould (1) for food, particularly for bread, of paper material having a substantially square or rectangular shape and exhibiting a base (2) having a polygonal shape and a lateral wall (3), the base (2) being delimited at least by longitudinal sides (2a) substantially parallel to each other and defining a main prevalent development direction of the base (2) and transversal sides (2b) substantially parallel to each other, the lateral wall (3) emerging transversally from the base (2) for defining a housing receptacle (4) for a food, the mould (1) exhibiting an inner surface (1a) facing the receptacle (4) and an opposite outer surface (1b), the mould (1) exhibiting a coating of oil-repellent material and/or water-repellent material at least at the inner surface (1a), the lateral wall (3) comprising respective first walls (6) emerging from the longitudinal sides (2a) of the base (2) and third walls (11) emerging from the transversal sides (2b) of the base (2), a respective second wall (7) being interposed between each first wall (6) and third wall (11) for defining a central portion of an angular portion (5), the first, second and third walls (6, 7, 11) being transversal to each other and defining the housing receptacle (4), the mould (1) exhibiting an opening (10) defined between the base (2) and lateral wall (3) at each angular portion (5), said opening (10) being defined between the base (2) and second wall (7),
the mould (1) being in a single piece and being formed from one flat preform (100) of paper material.

2. Cooking mould (1) according to the preceding claim, wherein the mould (1) exhibits a single opening (10) at each angular portion (5) and wherein the number of the angular portions (5) is equal to four and the number of the openings (10) is equal to four.

3. Cooking mould (1) according to anyone of the preceding claims, wherein said at least one opening (10) is defined at a base perimeter of the mould (1) and exhibits an elongated shape substantially parallel to the second wall (7).

4. Cooking mould (1) according to the preceding claim, wherein the base (2) comprises joining sides (2c) interposed between each longitudinal side and each transversal side, the opening (10) extends for a length substantially equal to the length of a joining side (2c).

5. Cooking mould (1) according to anyone of the preceding claims, wherein the lateral wall (3) comprises one or more gluing areas glued to each other.

6. Cooking mould (1) according to anyone of the preceding claims, wherein the layer is of silicon material.

7. Cooking mould (1) according to anyone of the preceding claims, wherein the base (2) and lateral wall (3) are made of a multilayer material and comprise a first and second outer substantially smooth layers (100a, 100b) and a third inner layer (100c) interposed between the first and second layers (100a, 100b), the third layer (100c) being ondulated, the first, second and third layers (100a, 100b, 100c) being of paper material, particularly the paper material exhibiting a grammage comprised between 200 and 300 gr.

8. Cooking mould (1) according to anyone of the preceding claims, wherein the lateral wall (3) comprises an upper end edge (3') opposite to the base, the end edge (3') exhibiting, at least above the longitudinal sides (2a) of the base (2), a substantially ondulated outline.

9. Cooking mould (1) according to anyone of the preceding claims, wherein the mould (1) exhibits at least one engagement portion (8) emerging from, and transversal to, the second wall (7), the engagement portion (8) developing from a side of the second wall (7), and wherein the mould (1) exhibits overlapping areas (12) between the third wall (11) and engagement portion (8), said overlapping areas (12) being defined at the transversal sides (2b) of the base (2) and wherein the engagement portion (8) and third wall (11) are constrained, for example glued, to each other.

10. Cooking mould (1) according to the preceding claim, wherein the engagement portion (8) is disposed outside the third wall (11) with respect to the housing receptacle (4) and the third wall (11) faces the receptacle (4), the engagement portion (8) being parallel to the third wall (11), the engagement portion (8) having a shape which is at least partially curvilinear and being supported by the angular portion (5) and/or third wall (11) and wherein the engagement portion (8) covers at least partially the third wall (11), particularly a lower area of the third wall (11) being uncovered by any engagement portion (8).

11. Cooking mould (1) according to the preceding claim, wherein the engagement portions (8) are delimited by an outline having an upper and lower substantially rectilinear lengths (8a, 8b), and a joining length (8c) shaped substantially as a "S", particularly the engagement portions (8) of the adjacent angular portions (5) being engaged with a same third wall (11) and still more particularly the engagement portions (8) of the adjacent angular portions (5) being spaced from each other.

12. Cooking mould (1) according to claim 11, wherein the engagement portions (8) of the adjacent angular portions (5) face each other and are engaged with a same third wall (11), the respective joining lengths (8c) facing each other and being substantially countershaped.

13. Cooking mould (1) according to anyone of the preceding claims, wherein the base (2) has a substantially rectangular or octagonal shape, the first and/or second walls (6, 7) exhibiting a substantially trapezoidal shape, the first, second and engagement portions (6, 7, 8) being laterally delimited by creasing lines (9) and the mould being flared for enabling to stake further identical cooking moulds.

14. Cooking mould (1) according to anyone of the preceding claims, wherein the mould does not comprise separated coating elements of the inner wall of the housing receptacle, such as oven papers or similar supports.

15. Use of a cooking mould (1) according to anyone of the preceding claims for cooking food, particularly bread.
